# EUROPÄISCHE PATENTSCHRIFT

(11) **EP 2 098 188 B1**
(45) Veröffentlichungstag und Bekanntmachung des Hinweises auf die Patenterteilung: **28.07.2021**
(21) Anmeldenummer: 09154368.6
(22) Anmeldetag: 04.03.2009
(51) Int. Cl.: A61C 13/20, C04B 35/64

(54) **Verfahren zum Sintern eines Dentalmaterials**
Method for Sintering a Dental Material
Méthode de frittage d'un matériau dentaire

(30) Priorität: 05.03.2008 DE 102008012578
(43) Veröffentlichungstag der Anmeldung: 09.09.2009
(73) Patentinhaber: Ivoclar Vivadent AG, 9494 Schaan (LI)
(72) Erfinder: Rohner, Gottfried, 9450, Altstätten (CH); Pokorny, Walter, 6719, Gais (AT); Grünenfelder, Robert, 9492, Eschen (LI); Rothbrust, Frank, 6820, Franstanz (AT)
(74) Vertreter: Splanemann

(56) Entgegenhaltungen:
- EP-A- 0 337 897
- DE-C1- 3 841 902
- US-A1- 2002 106 611
- MENEZES ET AL: "Microwave hybrid fast sintering of porcelain bodies" JOURNAL OF MATERIALS PROCESSING TECHNOLOGY, ELSEVIER, NL, Bd. 190, Nr. 1-3, 11. Mai 2007 (2007-05-11), Seiten 223-229, XP022070994 ISSN: 0924-0136
- None

## Beschreibung

Derartige Brennöfen und Verfahren werden insbesondere im Bereich der Sinterung von Dentalmaterialien eingesetzt.

Ein derartiger Dentalofen und ein derartiges Verfahren ist seit langem bekannt. Gerade für das Sintern von angepassten Dentalmaterialien ist es wichtig, das Aufheizen, das eigentliche Brennen, aber auch das Abkühlen, nach einem vorgegebenen und reproduzierbaren Schema ablaufen zu lassen, um einerseits die erforderliche Materialverfestigung sicher zu stellen, aber andererseits auch zu gewährleisten, dass das Schrumpfen gleichmäßig im gesamten Umfang erfolgt.

Typischerweise wird hierzu die Temperatur im Innenraum des Dentalofens mit einem genau vorgegebenen Temperaturprofil gesteuert. Hierzu sind die Heizelemente an eine entsprechende Steuervorrichtung angeschlossen, und meist wird ein Temperatursensor verwendet.

Der Temperatursensor ist typischerweise im oberen Bereich der Brennkammer angeordnet, die als Arbeitsraum dient, wobei dort die Restaurationen abgestellt sind.

Temperatursensoren können daher in oder an der Wand des Brennraums angeordnet sein, und es ist bekannt, über spezielle Kalibriervorrichtungen zu gewährleisten, dass die Temperatur im Innenraum des Dentalofens einem vorgegebenen Temperaturprofil folgt.

Andererseits ist die Wärmekapazität der eingebrachten Masse ein Parameter, der das Aufheizprofil des Dentalmaterials beeinflusst. Typischerweise ist die Aufheizrate geringer, wenn große Massen eingesetzt werden, und größer, wenn kleine Massen eingesetzt werden. Um diesen Effekt zu kompensieren, ist es möglich, die eingebrachte Masse vorab zu erfassen und Kalibrierkurven für unterschiedliche Massen bereitzustellen. Dies ist jedoch aufwendig und stark von der Sorgfalt des Bedieners abhängig.

Außerdem kann meist die Masse des eingebrachten Dentalmaterials nicht exakt festgestellt werden.

Daher ist es bekannt, mit einer vergleichsweise geringen Aufheizrate zu arbeiten, um den Dentalmaterialien die Möglichkeit zu geben, einen homogenen Temperaturausgleich herbeizuführen, unabhängig davon, welche Masse vorliegt. Dieses Verfahren ist zwar im Grunde gut, läuft jedoch den Wünschen im Dentallabor, durch einen kurzen Produktionszyklus Kosten zu sparen, diametral entgegen.

Ferner ist es aber aus der DE 44 47 130 A1 auch bekannt geworden, eine recht große Aufheizrate von über 100°C/min mit einer hohen Temperatur von 1300°C bis 1600°C zu kombinieren. Der dortige Sinterofen ist zwar im Grunde recht gut für das rasche Sintern von Materialien geeignet, deren Masshaltigkeit weniger relevant ist. Für Dentalmaterialien ist ein derartiger Ofen jedoch nicht geeignet.

EP 0 337 897 A offenbart auch ein Verfahren zum Sintern eines Dentalmaterials.

Demgegenüber liegt der Erfindung die Aufgabe zu Grunde, ein Verfahren zum Sintern eines Dentalmaterials mit einem Dentalofen gemäß dem Oberbegriff von Anspruch 1 zu schaffen, das trotz produktionstechnischer Vorteile auch für die Herstellung von Dentalmaterialien besonders gut geeignet ist.

Diese Aufgabe wird erfindungsgemäß durch Anspruch 1 gelöst.

Vorteilhafte Weiterbildungen ergeben sich aus den Unteransprüchen. Erfindungsgemäß ist es vorgesehen, einen Dentalofen mit einer Brennkammer mit einer ausgesprochen hohen ersten Aufheizrate aufzuheizen, bis eine Temperatur erreicht ist, die einer Vorsintertemperatur entspricht. Mit dem erfindungsgemäß günstigen Vorsintern lässt sich erreichen, dass das Sintermaterial nach dem Vorsintern bearbeitet werden kann.

Überraschend lässt sich durch die erfindungsgemäße rasche Aufheizung mit der ersten hohen Aufheizrate, die erst bei einer Temperatur von 1000°C, 1100°C oder auch sogar 1200°C beendet ist, der Sinterzyklus deutlich beschleunigen, ohne dass es zu Nachteilen bei der Endfestigkeit einerseits oder bei der Passgenauigkeit andererseits kommt. Überraschend ergibt sich sogar die Beobachtung, dass die Endfestigkeit durch diese rasche Aufheizung gegenüber einer langsameren Aufheizung erhöht wird.

Erfindungsgemäß schließt sich an die erste Aufheizung mit der hohen ersten Aufheizperiode eine Zwischenheizperiode an, deren Aufheizrate oder Temperaturgradient deutlich geringer als die der Erstaufheizperiode ist. Beispielsweise kann der Temperaturgradient während der Zwischenheitsperiode 2°K, 3°K, 5°K oder 10°K/min betragen.

Anschließend an die Zwischenheizperiode, deren Dauer in weiten Bereichen an die Erfordernisse anpassbar ist und beispielsweise, 5 min, 10 min, 20 min oder 30 min betragen kann, ist eine Endaufheizperiode vorgesehen, deren Temperaturgradient oder Aufheizrate ebenfalls deutlich höher ist und beispielsweise mindestens 20°K/min, bevorzugt aber etwa 50°K/min, betragen kann.

Die Temperaturdifferenz zwischen der Temperatur gegen Ende der Zwischenheizperiode und der Endtemperatur gegen Ende der Endaufheizperiode ist vergleichsweise gering und beträgt beispielsweise etwas mehr als 100°, oder beispielsweise 200°, ohne dass es nicht zur Verschlechterung der Passgenauigkeit kommt.

Hingegen wird durch die geringe Aufheizrate während der Zwischenheizperiode die Passgenauigkeit deutlich verbessert.

Erfindungsgemäß besonders günstig ist es, wenn sich an das Ende der Aufheizperiode eine Halteperiode anschließt, während derer die Temperatur in der Brennkammer im Wesentlichen auf der Endtemperatur gegen Ende der Aufheizperiode oder knapp darunter gehalten wird. Durch diese Massnahme lässt sich die Enddichte und die Festigkeit des Dentalmaterials deutlich verbessern.

Für die erfindungsgemäße Ausgestaltung des Temperaturprofils ist die Realisierung eines besonderen Dentalofens besonders günstig. Um den erwünschten hohen Temperaturgradienten realisieren zu können, weist ein erfindungsgemäßer Dentalofen bevorzugt zwischen den Heizelementen und dem Brennraum eine geringe Wärmekapazität auf, die beispielsweise aus einem eher dünnen Isolationsmaterial beispielsweise Quarzglas bestehen kann. Die vergleichsweise wirksamen Heizelemente würden es erlauben, den Dentalofen innerhalb von etwas mehr als 10 min von Raumtemperatur auf 1600°C aufzuheizen, wobei es sich versteht, dass erfindungsgemäß ein besonderes Temperaturprofil angestrebt wird.

Der erfindungsgemäße Dentalofen trägt der Tatsache besonders Rechnung, dass das Sintern bei der trockenen Sinterung in drei Stadien erfolgt, nämlich einem Anfangsstadium, einem Zwischenstadium und einem Endstadium, wobei im Zwischenstadium die Sinterrate, also das Schwinden des Materials pro Zeiteinheit, am größten ist, so dass beim Ende des Zwischenstadiums beispielsweise 90% der Enddichte erreicht sein können.

Erfindungsgemäß bevorzugt ist es das Anfangsstadium bereits während des Vorsinterns durchlaufenzulassen, so dass die Sinterrate während des Fertigsinterns lediglich das Zwischen- und Endstadium durchläuft.

In diesem Zusammenhang ist es erfindungsgemäß günstig, wenn auch für die Wärmedämmung eine geringe Wärmekapazität verwendet wird, wobei es beispielsweise auch möglich ist, die Wärmedämmschicht von dem Heizelement beabstandet zu halten, so dass die Kapazität keine Rolle mehr spielt. Dies hat zudem den besonderen Vorteil, dass durch Konvektion die Abkühlung der Heizelemente deutlich verbesserbar ist. Beispielsweise können auch hinterlüftete Heizelemente realisiert werden, Heizelemente also, bei denen die Luftströmung bei geöffneter Ofenhaube auch auf der von der Brennkammer abgewandten Seite zur Kühlung der Heizelemente beiträgt.

Der erfindungsgemäße Dentalofen kann ein Ofen mit einer Brennkammer sein, die sich von einem Unterbau entfernen lässt. Hierbei ist sowohl eine Hublagerung als auch eine Schwenklagerung als auch eine Kombination dieser Lagerungen möglich. Ein Beispiel für eine derartige Lagerung ist aus der DE 195 42 984 C1 ersichtlich.

Zusätzlich zur Konvektionskühlung kann auch eine aktive Kühlung über ein Gebläse eingesetzt werden, um insofern jedenfalls die erwünschte Abkühlrate zu erreichen. Dies gilt insbesondere dann, wenn ein Dentalofen in klassischer Form mit einer Brennkammertür eingesetzt wird, wobei ein Dentalbrennofen mit einer flachen Auflagefläche und einer abnehmbaren Brennhaube bevorzugt ist.

Erfindungsgemäß kann die Temperatur und Dauer der Vorverfestigung durch das Vorsintern in weiten Bereichen an die Erfordernisse angepasst werden. Bevorzugt erfolgt das Vorsintern in einem separaten Prozessschritt vorab am Dentalblock. Beispielsweise kann das Vorsintern bei der Endtemperatur der ersten Aufheizperiode erfolgen, also beispielsweise bei 1100°C oder bei 1250°C. Dieses Vorsintern hat den Vorteil, dass das vorgesinterte Material noch mechanische bearbeitet werden kann, da die Härte deutlich geringer als beim fertiggesinterten Material ist.

Gegenüber an sich bekannten Hochtemperatursinteröfen ist es erfindungsgemäß besonders bevorzugt, dass die Zykluszeit deutlich reduziert ist, gegenüber den typischen 8 bis 10 Stunden für das Fertigsintern und Abkühlen bei bekannten Hochtemperatursinteröfen.

Erfindungsgemäß ist es demgegenüber möglich, die gesamte Zykluszeit auf weniger als 3 Stunden zu reduzieren, einschließlich der Abkühlung, und in einer modifizierten Ausführungsform der erfindungsgemäßen Lösung lässt sich die gesamte Zykluszeit auf weniger als 90 min trotz der Verwendung von hochfester Dentalkeramik mit Brenntemperaturen von mehr als 1500°C reduzieren.

Gemäß einer alternativen Ausführungsform ist es vorgesehen, anstelle eines Sinterofens einen Mikrowellenofen für die Realisierung des erfindungsgemäßen Dentalofens einzusetzen.

Die erfindungsgemäß beschleunigte Brennkurve zeichnet sich in zeichnerischer Darstellung durch eine "Blockform mit Schultern" aus. Die erste Aufheizperiode ist recht kurz mit einem großen Temperaturgradienten, ebenso wie die End-Abkühlphase mit einem ebenfalls steilen Temperaturgradienten. Damit steht eine im Vergleich zur Gesamtlänge der Heizkurve deutlich verlängerte Temperaturphase oberhalb von 1100°C zur Verfügung, die dann erfindungsgemäß optimiert werden kann. So ist es erfindungsgemäß günstig, wenn bei einer Kurz-Brennkurve von weniger als 3 Stunden die "Hochtemperaturphase" 68%, also insofern knapp 70% des gesamten Brennzyklus einnimmt, bei einer Standard-Brennkurve sogar über 80%, je bezogen auf das Aufheizen von der Raumtemperatur und das Abkühlen auf Raumtemperatur und die Dauer, in der eine die Brenntemperatur von mehr als 1100°C eingehalten ist.

Durch die Einsparung von Brennhilfsmitteln lässt sich die Wärmekapazität oder thermische Masse im Verhältnis zu Brennöfen mit Brennhilfsmitteln weiter reduzieren. Erfindungsgemäß besonders günstig ist es auch, wenn anstelle einer passiven Kühlung eine aktive Lüftung auch gerade im Zwischenraum zwischen der Wärmedämmung und dem Heizelement erfolgt, und auch innerhalb des geöffneten Brennraums, so dass die erwünschte Abkühlrate erreicht werden kann.

Bevorzugt ist es in diesem Zusammenhang, wenn die insofern hinterlüftete Brennkammer strömungsgünstig ausgebildet ist, so dass die aktive Lüftung mit vergleichsweise geringer Gebläsedrehzahl und damit recht leise realisierbar ist.

Hierzu sind bevorzugt zwei Strömungskanäle vorgesehen, nämlich ein Hinterlüftung-Strömungskanal und ein Strömungskanal durch die Brennkammer hindurch, wobei es sich versteht, dass mindestens teilweise - gerade bei hohen Temperaturen - auch die Konvektionskühlung darstellbar ist.

Erfindungsgemäß ist es vorgesehen, dass das zu sinternde Sintermaterial in einer ersten Aufheizperiode mit einer Aufheizrate von mehr als 50°K/min aufgeheizt wird, wobei zwischen dem Ende der ersten Aufheizperiode und dem Beginn einer Endheizperiode eine Zwischenheizperiode mit einer deutlich geringeren Aufheizrate als 50°K/min vorhanden ist, insbesondere weniger als 10°K/min, und wobei die erste Aufheizperiode und die Endheizperiode materialunabhängig eingestellt sind und dass die Zwischenheizperiode hinsichtlich ihrer Länge und ihrer Aufheizrate in Abhängigkeit von dem zu sinternden Material festgelegt ist.

In einer weiteren bevorzugten Ausgestaltung ist es vorgesehen, dass die maximale Temperatur in der Heizkammer etwa 1.600°C beträgt und der Ofen von Raumtemperatur ausgehend in seiner Heizkammer innerhalb von weniger als 30 Minuten auf 1.600°C aufheizbar ist.

In einer weiteren bevorzugten Ausgestaltung ist es vorgesehen, dass die Zwischenaufheizrate um etwa eine Zehnerpotenz, insbesondere um den Faktor 10 bis 50, geringer als die Erstaufheizrate ist.

In einer weiteren bevorzugten Ausgestaltung ist es vorgesehen, dass eine Heizkammer des Ofens von einer hitzebeständigen Isolation, insbesondere einem aus Faser bestehenden, gepressten Formteil, umgeben ist, dessen Wandstärke bevorzugt zwischen 15 und 25 mm beträgt.

In einer weiteren bevorzugten Ausgestaltung ist es vorgesehen, dass die Zwischenheizperiode von der Temperatur und/oder der Zeit her so gewählt ist, dass sie das Zwischenstadium des Sintervorgangs des zu sinternden Dentalmaterials abdeckt, in welchem die Sinterrate, aufgetragen über die Temperatur/Zeit, am größten ist.

In einer weiteren bevorzugten Ausgestaltung ist es vorgesehen, dass das zu brennende Dentalmaterial vorgesintert und/oder vorverfestigt ist und vor der eigentlichen Sinterung eine Festigkeit hat, die deutlich geringer, insbesondere weniger als halb so groß wie die Endfestigkeit des Sintermatierals ist.

In einer weiteren bevorzugten Ausgestaltung ist es vorgesehen, dass die Erstaufheizrate so gewählt ist, dass sie der maximalen Aufheizrate entspricht, bei der kein Überschwingen beim Übergang von der Erstaufheizperiode zu der Zwischenperiode entsteht, aber mindestens 50°K min⁻¹ beträgt.

In einer weiteren bevorzugten Ausgestaltung ist es vorgesehen, dass nach Ablauf einer Haltezeit der Ofen mit einer ersten Abkühlrate abkühlt, die geringer als die Aufheizrate der Erstaufheizperiode und größer als die Aufheizrate der Zwischenaufheizperiode ist, und dass anschließend hieran eine größere zweite Abkühlrate eingestellt ist.

In einer weiteren bevorzugten Ausgestaltung ist es vorgesehen, dass es sich bei dem Dentalofen um einen Mikrowellenofen handelt.

In einer weiteren bevorzugten Ausgestaltung ist es vorgesehen, dass dentales Zahnersatzmaterial trocken oder in Flüssigsinterung gesintert wird, dadurch gekennzeichnet, dass das Sintermaterial eine Oxidkeramik aufweist, die insbesondere aus ZrO₂, aus Al₂O₃ und Zusammensetzungen dieser besteht und insbesondere ein Dotierungshilfsmittel aufweist.

In einer weiteren bevorzugten Ausgestaltung ist es vorgesehen, dass beginnend mit dem Ablauf der Haltezeit eine Zwangskühlung des Ofens vorgenommen wird, die zur Abkühlung des Zahnersatzmaterials auf eine Entnahmetemperatur, insbesondere von ca. 400°C, in weniger als 60 Minuten, insbesondere 20 bis 60 Minuten, führt.

Weitere Vorteile, Einzelheiten und Merkmale ergeben sich aus der nachstehenden Beschreibung eines Ausführungsbeispiels anhand der Zeichnung. Es zeigen:
- Fig. 1: eine schematische und teilweise aufgeschnittene Ansicht eines erfindungsgemäßen Dentalofens; und
- Fig. 2: zwei beispielhafte Ausführungsformen von Brennkurven für den erfindungsgemäßen Dentalofen.

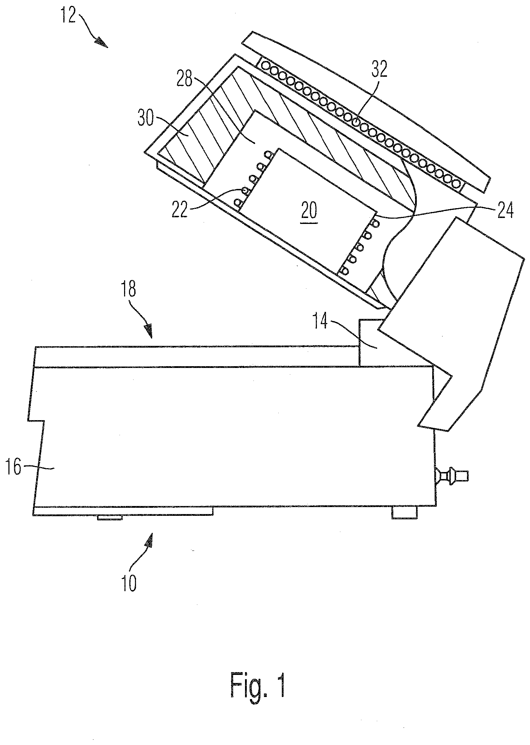

Der in Fig. 1 dargestellte Dentalofen 10 weist eine Ofenhaube 12 auf, die über ein Schwenkgelenk 14 an einem Ofenunterteil 16 gelagert ist. Das Unterteil 16 weist auf seiner Oberseite eine Auflagefläche 18 auf, die dafür bestimmt ist, das zu brennende Dentalmaterial aufzunehmen. In der Ofenhaube 12 ist eine Brennkammer 20 vorgesehen, die sich nach der Art eines eher flachen Zylinders erstreckt und bei geschlossener Ofenhaube 12 von der Auflagefläche 18 unten abgeschlossen ist, so dass die Auflagefläche 18 den Boden der Brennkammer 20 bildet.

Die Brennkammer 20 ist von Heizelementen 22 kreisringförmig oder spiralig umgeben.

Dieser Aufbau eines Dentalofens 10 ist an sich bekannt.

Erfindungsgemäß sind besonders starke Heizelemente vorgesehen, die so ausgelegt sind, dass sie grundsätzlich in der Lage sind, eine Aufheizung des Ofens von Raumtemperatur auf 1600°C innerhalb von etwa einer Viertel Stunde zu realisieren. Dementsprechend weist der Dentalofen einen max. Temperaturgradienten von 120°K/min auf.

Die Wärmekapazität der Brennkammer 20 und der die Brennkammer 20 umgebenden Teile ist gering.

Die Heizelemente 22 sind zudem deutlich hinterlüftet. Hierzu ist ein Luftraum 28 vorgesehen, der die Heizelemente 22 und damit den Brennraum 20 allseits umgibt. Der Luftraum 28 ist recht groß und nimmt einen erheblichen Teil des Innenraums der Ofenhaube 12 ein. Die Ofenhaube 12 weist den Luftraum 28 umgebend eine Wärmedämmschicht 30 auf, die - auch wenn dies in Fig. 1 nicht ersichtlich ist - auch Durchbrechungen aufweisen kann, die Luftkanäle bilden, damit die Luftströmung über Luftauslässe 32 im oberen Bereich der Ofenhaube 12 erleichtert wird.

Die Dimensionierung sowohl des Luftraums 12 als auch der Wärmedämmschicht 30 lässt sich den weichen Bereichen an die Erfordernisse anpassen, wobei es auch möglich ist, mit einer recht dünnen Wärmedämmschicht von lediglich beispielsweise 15 mm zu arbeiten.

Das bevorzugt vorgesehene Dentalmaterial wird erfindungsgemäß auf die Auflagefläche 18 aufgebracht. Nach Schließen der Ofenhaube 12 wird das Heizelement 22 mit max. Leistung eingeschaltet, so dass die Brennkammer 20 ausgesprochen rasch auf beispielsweise 1200°C erwärmt wird. Diese Temperatur kann im Wesentlichen der Vorsintertemperatur entsprechen. Anschließend hieran wird während einer Zwischenheizperiode die Temperatur mit einem geringen Temperaturgradienten erhöht, bis eine Temperatur von etwa 100°C unter der Endtemperatur erreicht ist. Anschließend hieran wird die Temperatur wiederum recht rasch auf die Endtemperatur erhöht und anschließend hieran für eine vorgegebene Zeitdauer gehalten, wobei die Haltezeit sowohl von der angebrachten Materialmenge des Dentalmaterials als auch von weiteren Parametern abhängen kann.

Anschließend hieran wird die Temperatur reduziert, und zwar bevorzugt zunächst ohne aktive Kühlung, wobei die aktive Kühlung eingeschaltet wird, wenn die Vorsintertemperatur wiederum erreicht ist, so dass ab dieser Temperatur die Kühlung rascher vonstatten geht, bis Raumtemperatur erreicht ist.

Alternativ kann bei einem noch stärker beschleunigten Brennzyklus die Abkühlung unmittelbar anschließend an die Haltezeit mit aktiver Kühlung erfolgen, so dass die Abkühlperiode insgesamt weiter verkürzt ist.

An eine Erstaufheizperiode 40, die gemäß Kurve 2 bei etwa 1100°C zu Ende ist, schließt sich eine Zwischenheitsperiode 42 an, die eine Aufheizung auf etwa 1350°C vornimmt.

Hieran anschließend ist eine Endaufheizperiode 44 vorgesehen, die die Temperatur auf 1500°C erhöht, welche Endtemperatur bei "Kurve 2" 100 min nach Beginn des Brennzyklus erreicht ist.

Während der Haltezeit 46 von etwa 30 min wird die Temperatur auf 1500°C gehalten und während der Erstabkühlperiode 48 wird die Temperatur innerhalb von weniger als 30 min auf 1100°C abgesenkt.

Hieran anschließend ist die Endkühlperiode 50 vorgesehen, über welche die Temperatur innerhalb von ebenfalls etwas weniger als einer halben Stunde auf Raumtemperatur abgesenkt wird.

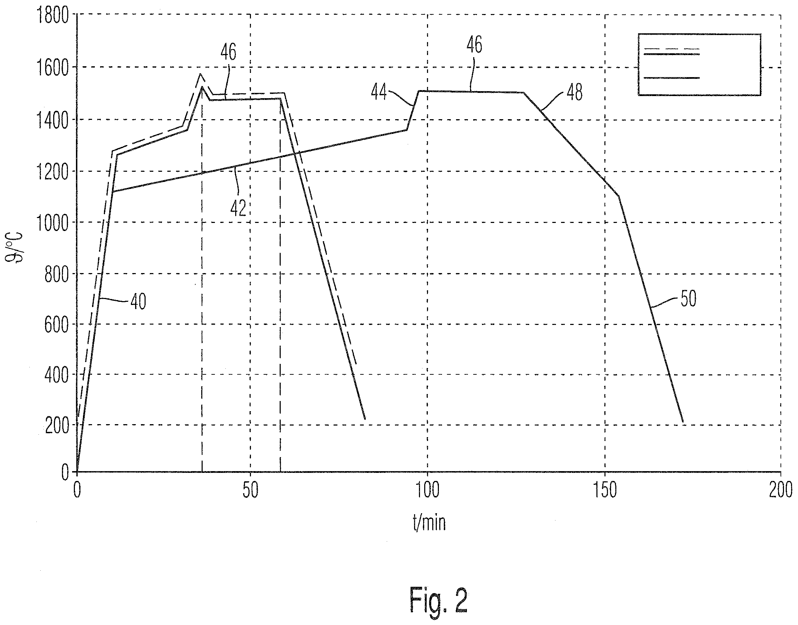

Dieser erfindungsgemäße Brennzyklus ist in Fig. 2 in zwei Ausführungsformen dargestellt. Für die als "Kurve 2" bezeichnete Kurve ergibt sich demnach folgende Brennkurve:

**Brennkurve 2**

| Rampe | Temperatur | Rate | Zeit | gesamt |
|---|---|---|---|---|
| | /C | /K min⁻¹ | /min | /min |
| 0 | 25 | | | |
| 1 | 1100 | 100 | 10.75 | 10.75 |
| 2 | 1350 | 3 | 83.33 | 94.08 |
| 3 | 1500 | 50 | 3.00 | 97.08 |
| 4 | 1500 | 0 | 30.00 | 127.08 |
| 5 | 1100 | -15 | 26.67 | 153.75 |
| 6 | 200 | -50 | 18.00 | 171.75 |

**Brennkurve 1**

| Rampe | Temperatur | Rate | Zeit | gesamt |
|---|---|---|---|---|
| | /C | /K min⁻¹ | /min | /min |
| 0 | 25 | | | |
| 1 | 1250 | 100 | 12.25 | 12.25 |
| 2 | 1350 | 5 | 20.00 | 32.25 |
| 3 | 1500 | 50 | 3.00 | 35.25 |
| 4 | 1500 | 0 | 25.00 | 60.25 |
| 5 | 1100 | -25 | 16.00 | 76.25 |
| 6 | 200 | -46.6 | 19.31 | 95.56 |

Die gesamte Brennkurve ist bei der modifizierten Ausführungsform gemäß "Kurve 1" noch weiter reduziert, auf etwa 95 min, wobei in beiden Fällen ein im Wesentlichen trapezförmigen Brennkurvenverlauf vorgesehen ist, mit je einer großen Erstaufheizrate und einer ebenso oder nahezu ebenso großen Endabkühlrate. Dies ist auch aus der vorstehenden Tabelle ersichtlich.

Im Unterschied zu dem Brennzyklus gemäß Kurve 2 ist bei Kurve 1 ein Überschwingen der Heizleistung auf eine Temperatur von beispielsweise 50°C oberhalb der Temperatur der Haltezeit 46 vorgesehen.

Überraschend wird durch die Schnellaufheizung auf die Vorsintertemperatur, oder aber auch auf 1250°C, die Festigkeit erhöht, während kein messbarer Einfluss auf die Passgenauigkeit vorliegt. Hingegen wird durch die langsame Aufheizung während der Zwischenheizperiode die Passgenauigkeit und damit der Verzug verbessert, während die Festigkeit nicht negativ beeinflusst wird. Die Endaufheizung, beispielsweise um 150°C, auf die Endaufheiztemperatur, die zwischen 1500°C und 1600°C liegen kann, hat hingegen keinen besonderen Einfluss auf die Festigkeit und gar keinen Einfluss auf die Passgenauigkeit.

Hingegen hat die vergleichsweise lange Haltezeit einen recht großen Einfluss auf die Festigkeit und insbesondere auch auf die Enddichte, und auch die gemäß Kurve 2 vorgesehene relativ langsame Abkühlung bis auf die Vorsintertemperatur hat einen messbaren Einfluss auf die Festigkeit, während die sich hieran anschließende Abkühlung der Raumtemperatur praktisch keinen weiteren Einfluss auf die Festigkeit bzw. die Dichte hat.

Erfindungsgemäß lässt sich somit ein Dentalofen mit einem kurzen Brennzyklus, aber dennoch besonders ansprechende Brennergebnissen realisieren.

## Patentansprüche

1. Verfahren zum. Sintern eines Dentalmaterials mit einem Dentalofen, wobei der Dentalofen eine Ofenhaube (12), ein Ofenunterteil (16), eine Heizkammer (20) und eine Auflagefläche (18) aufweist, wobei das zu sinternden Dentalmaterial auf der Auflagefläche (18) in der Heizkammer (20) aufgenommen wird, wobei das zu sinternde Sintermaterial in einer ersten Aufheizperiode mit einer Aufheizrate von mehr als 50°K/min aufgeheizt wird, wobei der Ofen auf mindestens 1000°C, insbesondere auf 1100°C bis 1250°C aufgeheizt wird, wobei diese erreichte Temperatur einer Vorsintertemperatur des Dentalmaterials entspricht, wobei die erste Aufheizperiode materialunabhängig eingestellt ist, wobei an die erste Aufheizperiode eine Zwisehenheizperiode sich anschließt, die mindestens 5 Minuten lang, insbesondere mindestens 10 Minuten lang, ist, deren Aufheizrate weniger als 10°K/min ist, wobei die Zwischenheizperiode hinsichtlich ihrer Länge und ihrer Aufheizrate in Abhängigkeit von dem zu sinternden Material festgelegt wird, wobei an die Zwischenheizperiode eine Endaufheizperiode sich anschließt, deren Aufheizrate mindestens 20°K/min, insbesondere mehr als 50°K/min, beträgt, wobei an die Endaufheizperiode eine Haltezeit für mindestens 5 Minuten, insbesondere für 25 Minuten oberhalb der Temperatur gegen Ende der ersten Aufheizperiode sich anschließt, wobei die Endheizperiode materialunabhängig eingestellt ist, wobei anschließend hieran eine Abkühlung, insbesondere Zwangskühlung des Ofens (10) vorgenommen wird, die zur Abkühlung des Dentalmaterials auf eine Entnahmetemperatur, insbesondere von ca. 400°C, in weniger als 60 Minuten, insbesondere 20 bis 60 Minuten führt.

2. Verfahren nach Anspruch 1, wobei die Temperatur zunächst ohne aktive Kühlung reduziert wird, wobei die aktive Kühlung eingeschaltet wird, wenn die Vorsintertemperatur widerum erreicht ist, so dass ab dieser Temperatur die Kühlung rascher vonstatten geht, bis Raumtemperatur erreicht ist.

3. Verfahren nach Anspruch 1 oder 2, wobei die Abkühlung, insbesondere Zwangskühlung unmittelbar anschließend an die Haltezeit mit aktiver Kühlung erfolgt.

4. Verfahren nach einem der vorherigen Ansprüche, **dadurch gekennzeichnet, dass** die Heizkammer (20) des Ofens (10) von einer hitzebeständigen Isolation, insbesondere einem aus Faser bestehenden, gepressten Formteil umgeben ist, dessen Wandstärke vorzugsweise zwischen 15 und 25 mm beträgt.

5. Verfahren nach einem der vorherigen Ansprüche, **dadurch gekennzeichnet, dass** die Zwischenaufheizrate um etwa eine Zehnerpotenz, insbesondere um den Faktor 10 bis 50, geringer als die Erstaufheizrate ist.

6. Verfahren nach einem der vorherigen Ansprüche, **dadurch gekennzeichnet, dass** die Zwischenheizperiode von der Temperatur und/oder der Zeit her so gewählt ist, dass sie das Zwischenstadium des Sintervorgangs des zu sinternden Dentalmaterials abdeckt, in welchem die Sinterrate, aufgetragen über die Temperatur/Zeit, am größten ist.

7. Verfahren nach einem der vorherigen Ansprüche, **dadurch gekennzeichnet, dass** die Erstaufheizrate so gewählt ist, dass sie der maximalen Aufheizrate entspricht, bei der kein Überschwingen beim Übergang von der Erstaufheizperiode (40) zu der Zwischenperiode entsteht, aber mindestens 50°K/min beträgt.

8. Verfahren nach einem der vorherigen Ansprüche, **dadurch gekennzeichnet, dass** nach Ablauf einer Haltezeit (46) der Ofen (10) mit einer ersten Abkühlrate abkühlt, die geringer als die Aufheizrate der Erstaufheizperiode (40) und größer als die Aufheizrate der Zwischenaufheizperiode ist, und dass anschließend hieran eine größere zweite Abkühlrate eingestellt ist.

9. Verfahren nach einem der vorherigen Ansprüche, bei welchem dentales Zahnersatzmaterial trocken oder in Flüssigsinterung gesintert wird, **dadurch gekennzeichnet, dass** das Sintermaterial eine Oxidkeramik aufweist, die insbesondere aus ZrO², aus Al²O³ und Zusammensetzung dieser besteht und insbesondere ein Dotierungshilfsmittel aufweist.

10. Verfahren nach einem der vorherigen Ansprüche, **dadurch gekennzeichnet, dass** beginnend mit dem Ablauf der Haltezeit (46) eine Zwangskühlung des Ofens (10) vorgenommen wird, die zur Abkühlung des Zahnersatzmaterials auf eine Entnahmetemperatur von ca. 400°C, in weniger als 60 Minuten, inbesondere 20 bis 60 Minuten, führt.

## Claims

1. A method of sintering a dental material using a dental furnace, the dental furnace comprising a furnace hood (12), a furnace base (16), a heating chamber (20) and a support surface (18), the dental material to be sintered being received on the support surface (18) in the heating chamber (20), wherein the sinter material to be sintered is heated in a first heating period at a heating rate of more than 50°K/min, wherein the furnace is heated up to at least 1000°C, in particular to 1100°C to 1250°C, wherein this temperature reached corresponds to a presintering temperature of the dental material, wherein the first heating period is set independently of the material, wherein the first heating period is followed by an intermediate heating period which is at least 5 minutes, in particular at least 10 minutes, the heating rate of which is less than 10°K/min, wherein the intermediate heating period is defined with respect to its length and its heating rate as a function of the material to be sintered, the intermediate heating period being followed by a final heating period, the heating rate of which is at least 20°K/min, in particular more than 50°K/min, wherein the final heating period is followed by a holding time for at least 5 minutes, in particular for 25 minutes, above the temperature which exists towards the end of the first heating period, wherein the final heating period is set independently of the material, wherein, subsequently thereto, cooling, in particular forced cooling of the furnace (10) is performed, which causes cooling of the dental material to a withdrawal temperature, in particular of approximately 400°C in less than 60 minutes, in particular 20 to 60 minutes.

2. The method according to claim 1, wherein the temperature is first reduced without active cooling, wherein said active cooling is switched on when the presintering temperature has been reached again, so that, from this temperature, cooling will occur faster until room temperature is reached.

3. The method according to claims 1 or 2, wherein cooling, in particular forced cooling, will be performed immediately following the holding time, using active cooling.

4. The method according to one of the preceding claims, **characterized in that** the heating chamber (20) of the oven (10) is surrounded by a heat-resistant insulation, in particular a pressed molded part consisting of fiber, the wall thickness of which preferably is between 15 and 25 mm.

5. The method according to one of the previous claims, **characterized in that** the intermediate heating rate is lower than the initial heating rate by about one power of ten, in particular by a factor of 10 to 50.

6. The method according to one of the previous claims, **characterized in that** the intermediate heating period is selected in terms of temperature and/or time such that it covers the intermediate stage of the sintering process of the dental material to be sintered, in which the sintering rate, as plotted over the temperature/time, is highest.

7. The method according to one of the previous claims, **characterized in that** the initial heating rate is selected such that it corresponds to the maximum heating rate at which no overshoot occurs at the transition from the initial heating period (40) to the intermediate period, but is at least 50°K/min.

8. The method according to one of the previous claims, **characterized in that**, after a holding time (46) has elapsed, the furnace (10) cools down at a first cooling rate which is lower than the heating rate of the initial heating period (40) and higher than the heating rate of the intermediate heating period, and **in that** a higher second cooling rate is subsequently set.

9. The method according to one of the previous claims, wherein dental tooth replacement material is sintered in dry or in liquid sintering, **characterized in that** the sintered material comprises an oxide ceramic which consists in particular of ZrO₂, Al₂O₃ and a composition thereof and in particular comprises a doping aid.

10. The method according to one of the previous claims, **characterized in that**, starting at the holding time (46) expired, forced cooling of the furnace (10) is carried out, which causes cooling of the tooth replacement material to a withdrawal temperature of approx. 400°C, in less than 60 minutes, in particular 20 to 60 minutes.

## Revendications

1. Procédé de frittage d'un matériau dentaire avec un four dentaire, où le four dentaire présente une hotte de four (12), une base de four (16), une chambre de chauffage (20) et une surface de support (18), où le matériau dentaire à fritter est reçu sur la surface de support (18) dans la chambre de chauffage (20), où le matériau fritté à fritter est chauffé dans une première période de chauffage avec une vitesse de chauffage de plus de 50°K/min, où le four est chauffé à une température d'au moins 1000°C, en particulier de 1100°C à 1250°C, où cette température atteinte correspond à une température de préfrittage du matériau dentaire, où la première période de chauffage est réglée indépendamment du matériau, la première période de chauffage étant suivie d'une période de chauffage intermédiaire d'une durée d'au moins 5 minutes, en particulier d'au moins 10 minutes, dont la vitesse de chauffage est inférieure à 10°K/min, où la période de chauffage intermédiaire est définie en fonction de sa longueur et de sa vitesse de chauffage en fonction du matériau à fritter, où la période de chauffage intermédiaire est suivie d'une période de chauffage finale, dont la vitesse de chauffage est au moins 20°K/min, en particulier supérieure à 50°K/min, où la période de chauffage finale est suivie d'un temps de maintien pendant au moins 5 minutes, en particulier pendant 25 minutes, au-dessus de la température vers la fin de la première période de chauffage, où la période de chauffage finale est réglée indépendamment du matériau, où ensuite un refroidissement, en particulier un refroidissement forcé, du four (10) est effectué, qui sert à refroidir le matériau dentaire à une température d'enlèvement, en particulier d'environ 400°C, en moins de 60 minutes, en particulier entre 20 et 60 minutes.

2. Procédé selon la revendication 1, où la température est d'abord réduite sans refroidissement actif, le refroidissement actif étant activé lorsque la température de préfrittage est à nouveau atteinte, de manière qu'à partir de cette température, le refroidissement se poursuit plus rapidement jusqu'à atteindre la température ambiante.

3. Procédé selon la revendication 1 ou 2, où le refroidissement, en particulier le refroidissement forcé, a lieu immédiatement après le temps de maintien avec refroidissement actif.

4. Procédé selon l'une des revendications précédentes, **caractérisé en ce que** la chambre de chauffage (20) du four (10) est entourée d'un isolant résistant à la chaleur, en particulier d'une pièce moulée pressée constituée de fibres, dont l'épaisseur de paroi est de préférence comprise entre 15 et 25 mm.

5. Procédé selon l'une des revendications précédentes, **caractérisé en ce que** la vitesse de chauffage intermédiaire est inférieure à la vitesse de chauffage initiale d'environ une puissance de dix, en particulier d'un facteur de 10 à 50.

6. Procédé selon l'une des revendications précédentes, **caractérisé en ce que** la période de chauffage intermédiaire est choisie en termes de température et/ou de temps de manière à couvrir l'étape intermédiaire du processus de frittage du matériau dentaire à fritter, dans laquelle le taux de frittage, tracé en fonction de la température/du temps, est le plus élevé.

7. Procédé selon l'une des revendications précédentes, **caractérisé en ce que** la vitesse de chauffage initiale est choisie de manière à correspondre à la vitesse de chauffage maximale à laquelle aucun dépassement ne se produit lors de la transition de la période de chauffage initiale (40) à la période intermédiaire, mais est d'au moins 50°K/min.

8. Procédé selon l'une des revendications précédentes, **caractérisé en ce qu'**après l'écoulement d'un temps de maintien (46), le four (10) se refroidit à une première vitesse de refroidissement qui est inférieure à la vitesse de chauffage de la première période de chauffage (40) et supérieure à la vitesse de chauffage de la période de chauffage intermédiaire, et qu'ensuite une deuxième vitesse de refroidissement plus élevée est réglée.

9. Procédé selon l'une des revendications précédentes, où un matériau de prothèse dentaire est fritté à sec ou en frittage liquide, **caractérisé en ce que** le matériau fritté comprend une céramique oxydée constituée notamment de ZrO₂, de Al₂O₃ et d'une composition de ceux-ci, et comprend en particulier un auxiliaire de dopage.

10. Procédé selon l'une des revendications précédentes, **caractérisé en ce que**, à partir de la fin du temps de maintien (46), un refroidissement forcé du four (10) est effectué, qui conduit au refroidissement du matériau de prothèse dentaire à une température d'enlèvement d'environ 400°C, en moins de 60 minutes, en particulier de 20 à 60 minutes.
